# EUROPÄISCHE PATENTSCHRIFT

(11) **EP 3 308 556 B1**
(45) Veröffentlichungstag und Bekanntmachung des Hinweises auf die Patenterteilung: **27.07.2022**
(21) Anmeldenummer: 16730796.6
(22) Anmeldetag: 14.06.2016
(51) Int. Cl.: H04R 25/00

(54) **DRAHTLOS-MIKROFON UND/ODER IN-EAR-MONITORINGSYSTEM UND VERFAHREN ZUM STEUERN EINES DRAHTLOS-MIKROFONS UND/ODER IN-EAR-MONITORINGSYSTEMS**
WIRELESS MICROPHONE AND/OR IN-EAR-MONITORING SYSTEM AND METHOD FOR THE CONTROL OF A WIRELESS MICROPHONE AND/OR IN-EAR-MONITORING SYSTEM
MICROPHONE SANS FIL ET/OU SYSTÈME DE SURVEILLANCE INTRA-AURICULAIRE ET PROCÉDÉ DE COMMANDE D'UN MICROPHONE SANS FIL ET/OU D'UN SYSTÈME DE SURVEILLANCE INTRA-AURICULAIRE

(30) Priorität: 15.06.2015 DE 102015210873
(43) Veröffentlichungstag der Anmeldung: 18.04.2018
(73) Patentinhaber: Sennheiser electronic GmbH & Co. KG, 30900 Wedemark (DE)
(72) Erfinder: GEORGI, Sebastian, 30853 Langenhangen (DE); WATERMANN, Jan, 30161 Hannover (DE)
(74) Vertreter: Eisenführ Speiser
(86) Internationale Anmeldenummer: PCT/EP2016/063640
(87) Internationale Veröffentlichungsnummer: WO 2016/202804

(56) Entgegenhaltungen:
- CN-U- 204 316 653
- XUDONG WANG ET AL: "An OFDM-TDMA/SA MAC Protocol with QoS Constraints for Broadband Wireless LANs", WIRELESS NETWORKS ; THE JOURNAL OF MOBILE COMMUNICATION, COMPUTATION AND INFORMATION, KLUWER ACADEMIC PUBLISHERS, DO, Bd. 12, Nr. 2, 1. April 2006 (2006-04-01), Seiten 159-170, XP019216793, ISSN: 1572-8196, DOI: 10.1007/S11276-005-5263-1
- LANGTON C: "Intuitive Guide to Principles of Communications. Orthogonal Frequency Division Multiplexing (OFDM)", INTERNET CITATION, 1. Januar 2004 (2004-01-01), Seite 22pp, XP001539762, Gefunden im Internet: URL:http://www.complextoreal.com/chapters/ ofdm2.pdf [gefunden am 2010-03-05]

## Beschreibung

Die vorliegende Erfindung betrifft ein Drahtlos-Mikrofon und/oder In-Ear-Monitoringsystem und ein Verfahren zum Steuern eines Drahtlos-Mikrofons und/oder In-Ear-Monitoringsystems.

Professionelle Mikrofon- und In-Ear-Monitoringsysteme waren bislang unidirektionale Funkstrecken, die kontinuierlich in einem schmalen Kanal senden und empfangen. Dadurch war für jedes Gerät die Senderichtung vorgegeben und ein bidirektionaler Austausch von Kontrollinformationen nicht möglich. Parallel betriebene Mikrofon- und In-Ear-Strecken wurden im Frequenzmultiplex angeordnet.

In der prioritätsbegründenden deutschen Patentanmeldung hat das Deutsche Patent- und Markenamt die folgenden Dokumente recherchiert: US 2015/0125013 A1 und WO 2012/108643 A2.

Des Weiteren beschreibt CN 204 316 653 U ein schiffsgebundenes drahtloses Sprach- und Videokonferenzsystem mit Verschlüsselung, das einen drahtlosen Host, einen drahtlosen Zugangspunkt (Access Point) sowie drahtlose Mikrofone, drahtlose Kameras und drahtlose Monitore enthält. Diese kommunizieren über WiFi miteinander.

In "An OFDM-TDMA/SA MAC Protocol with QoS Constraints for Broadband Wireless LANs" (Xudong Wang et al. in WIRELESS NETWORKS; THE JOURNAL OF MOBILE COMMUNICATION, COMPUTATION AND INFORMATION, Kluwer Academic Publishers, Bd.12, Nr.2, S.159-170, 1.April 2006) wird ein OFDM-TDMA Protokoll mit Subträger-Allokation (subcarrier allocation, SA) für lokale drahtlose Breitbandnetzwerke beschrieben.

Es ist daher eine Aufgabe der vorliegenden Erfindung, ein verbessertes Drahtlos-Mikrofon und/oder In-Ear-Monitoringsystem vorzusehen. Insbesondere soll ein System vorgesehen werden, welches parallel betriebene Mikrofon- und In-Ear-Strecken in einem zeitlichen Multiplex anordnet und in einer vergleichsweise breiten Kanalbandbreite operiert. Alle im System verwendeten Geräte sollen fähig sein, Daten zu senden und zu empfangen.

Diese Aufgabe würde durch ein Drahtlos-Mikrofon und/oder In-Ear-Monitoringsystem nach Anspruch 1 und durch ein Verfahren zum Steuern eines Drahtlos-Mikrofons und/oder In-Ear-Monitoringsystems nach Anspruch 11 gelöst.

Somit wird ein Drahtlos-Mikrofon und/oder In-Ear-Monitoringsystem mit mindestens einem ersten mobilen Gerät, insbesondere einem Drahtlos-Mikrofon zum drahtlosen Senden von ersten Audiosignalen und einem zweiten mobilen Gerät vorgesehen. Das System weist ferner mindestens eine Basisstation zum drahtlosen Empfangen der von dem ersten mobilen Gerät gesendeten ersten Audiosignale und/oder zum drahtlosen Senden zweiter Audiosignale an das erste und/oder zweite mobile Gerät auf. Die Drahtlosübertragung basiert auf einer Orthogonal-Frequency-Division-Multiplexing-Übertragung (OFDM) Time Division Multiple Access (TDMA)-Übertragung. Jedes mobile Gerät sendet mindestens einmal innerhalb von 2 ms erste Audiosignale oder empfängt mindestens einmal innerhalb von 2 ms zweite Audiosignale. Die TDMA Übertragung erfolgt in TDMA-Frames. Jeder der TDMA-Frames weist eine Mehrzahl von Slots auf. Die mobilen Geräte sind dazu ausgestaltet, innerhalb einzelner Slots der TDMA-Frames die ersten oder zweiten Audiosignale zu senden oder zu empfangen. Die mindestens eine Basisstation ist dazu ausgestaltet, in einem Beacon Slot ein bekanntes Beacon-Symbol an die mobilen Geräte zu senden. Der Beacon Slot ist der erste Slot eines TDMA-Frames und ist ein Downlink-Slot. Die mobilen Geräte sind dazu ausgestaltet, das Beacon-Symbol für die OFDM-Übertragung auszuwerten, so dass die OFDM-Übertragung von den einzelnen mobilen Geräten auf dem Empfang des genannten Beacon-Symbols beruht. Die TDMA-Slots weisen jeweils genau ein OFDM-Symbol auf. Die mobilen Geräte verwenden das Beacon-Symbol zur Bestimmung eines Automatic Gain Control (AGC), zur Bestimmung einer zeitlichen Synchronisation und/oder zur Bestimmung eines Carrier Frequency Offset (CFO).

Während eines gemäß dem TDMA zur Verfügung gestellten Zeitschlitzes erfolgt eine Übertragung basierend auf einem OFDM-Verfahren. Die TDMA-Framelänge ist so kurz, da für eine professionelle Audioübertragung z.B. bei Drahtlos-Mikrofonsystemen eine Latenz von < 4ms benötigt wird.

Das erfindungsgemäße Drahtlos-Mikrofon und/oder In-Ear-Monitoringsystem stellt ein sogenanntes Program Making Special Event (PMSE)-System dar.

Gemäß der Erfindung verwendet das System bewusst ein OFDM Overhead (und damit zusätzliche Ressourcen), um ein System mit extrem niedriger Latenz auch in großen Hallen zu erreichen.

Gemäß einem weiteren Aspekt der vorliegenden Erfindung ist die Basisstation dazu ausgestaltet, zweite Audiosignale drahtlos zu senden. Das System weist ferner ein zweites mobiles Gerät, insbesondere eine Drahtlos-In-Ear-Monitoreinheit zum drahtlosen Empfangen von zweiten Audiosignalen von der Basisstation auf. Jede Drahtlos-In-Ear-Monitoreinheit empfängt innerhalb von 2ms mindestens einen Zeitschlitz.

Gemäß einem weiteren Aspekt der vorliegenden Erfindung weist das System ein drittes mobiles Gerät auf, dass zweite Audiosignale empfangen und erste Audiosignale senden kann.

Gemäß einem Aspekt der vorliegenden Erfindung weist jeder TDMA-Frame eine Mehrzahl von Slots oder Zeitschlitzen auf, welche jeweils genau ein OFDM-Symbol aufweisen.

Gemäß einem weiteren Aspekt der vorliegenden Erfindung wird das OFDM-Symbol mit einer zyklischen Erweiterung (beispielsweise ein Cyclic Prefix: CP) verlängert, um den Umweglaufzeiten des Funkkanals entgegenzuwirken. Diese Umweglaufzeiten ergeben sich durch Mehrfachausbreitung, d.h. die Funkwellen gelangen auf verschiedenen Wegen (und damit auch mit unterschiedlichen Laufzeiten) vom Sender zum Empfänger.

Gemäß einem weiteren Aspekt der vorliegenden Erfindung weist jeder Frame mindestens zwei Senderichtungs-Umschaltzeitdauern (Turn around Time, TAT) auf.

Gemäß einem weiteren Aspekt der vorliegenden Erfindung weist ein Frame eine Mehrzahl von Slots für das erste Audiosignal und eine Mehrzahl von Slots für das zweite Audiosignal (d. h. eine Kanalbündelung) auf. Die Kanalbündelung dient der Erhöhung der Robustheit und/oder der Qualität.

Gemäß einem weiteren Aspekt der vorliegenden Erfindung weist der Übertragungskanal eine Breite von 5 MHz bis 26 MHz auf.

Gemäß einem weiteren Aspekt der vorliegenden Erfindung bilden mehrere Frames einen Superframe. Innerhalb des Superframes ist beispielsweise ein Beacon-Slot als erster Slot, in dem zweiten Frame ist ein Control-Slot als erster Slot und in dem dritten Frame ist ein Antwort-Slot als erster Slot vorgesehen. Beacon-Slot, Control-Slot und Antwort-Slot können aber auch anders angeordnet sein.

Gemäß einem weiteren Aspekt der vorliegenden Erfindung weist der Control-Slot Steuerinformationen für die mobilen Geräte auf. Der Antwort-Slot dient zur Quittierung des Austauschs von Steuerinformationen in dem Control-Slot durch die mobilen Geräte.

Gemäß einem weiteren Aspekt der vorliegenden Erfindung nutzt das mobile Gerät den gemessenen Carrier Frequency Offset (CFO) um die eigene Trägerfrequenz zu korrigieren und dadurch mit der Trägerfrequenz der Basisstation zu synchronisieren.

Ein Orthogonal Frequency Divison Multiplexing (orthogonales Frequenzmultiplex-Verfahren, OFDM) ist ein Modulationsverfahren, welches mehrere orthogonale Träger zur digitalen Datenübertragung verwendet. Zur effizienten Implementierung kann eine FFT-Operation genutzt werden. Time Division Multiple Access TDMA (Zeitmultiplex-Verfahren) sieht mehrere Zeitabschnitte bzw. Zeitschlitze vor, während derer Daten verschiedener Sender auf einem Kanal übertragen werden können. Gemäß der Erfindung erfolgt während eines solchen Zeitabschnittes bzw. Zeitschlitzes eine OFDM-Übertragung.

Gemäß der Erfindung können, nachdem ein einzelnes OFDM-Symbol empfangen wird, die Daten in diesem Symbol sofort dekodiert werden. Mit anderen Worten, in dem OFDM-Symbol sind alle Informationen enthalten, um die Daten in dem Symbol dekodieren zu können.

Bei der OFDM wird eine große Anzahl von parallelen schmalbandigen Subträgern anstatt eines einzigen breitbandigen Trägers verwendet, um Informationen zu übertragen. Die jeweiligen Träger werden mit einer niedrigen Datenrate moduliert. Dadurch, dass sich die Signale orthogonal zueinander befinden, kommt es nicht zu Interferenzerscheinungen. Der Vorteil der OFDM liegt darin, dass sie eine robuste Übertragung im Hinblick auf mögliche Mehrwegeausbreitung darstellt.

Der Betrieb von Drahtlos-Mikrofon- und In-Ear-Monitoringsystemen in großen Hallen stellt ein typisches Anwendungsszenario dar. Dort entstehen aufgrund von Reflektionen an Wänden, Decken und am Boden eine Vielzahl von Ausbreitungspfaden zwischen Sende- und Empfangsantennen. Den dadurch entstehenden Verzerrungen des Empfangssignals durch den Kanal kann mit der OFDM Übertragungstechnik wirkungsvoll und effizient entgegengewirkt werden. Die Betriebssicherheit erhöht sich dadurch stark im Vergleich zu üblichen Einträgersystemen.

In einem OFDM-System erfolgt die Übertragung in Form von OFDM-Symbolen, welche eine größere Anzahl von Bits enthalten. Wenn also eine digitale Audioerfassung z.B. mit einer Abtastrate von 48 kHz und einer Bittiefe von 16 Bits erfolgt, so kann zunächst eine größere Anzahl von solchen Audiosamples gesammelt werden und dann gemeinsam in einem Zeitschlitz übertragen werden. Durch das Sammeln von Audiosamples vor ihrer Übertragung entsteht aber ein zeitlicher Versatz von der Erfassung eines einzelnen Audiosamples bis zu seiner Übertragung.

Die Forderung nach einer sicheren drahtlosen Übertragung von Audiosignalen auch in einer großen Halle mit den beschriebenen Reflektionen, die erfindungsgemäß durch eine OFDM-Übertragung gelöst wird, steht damit im Zielkonflikt zu der ebenfalls bestehenden Forderung nach einer möglichst geringen Verzögerung bei der Übertragung der Audiosamples. Es besteht daher der Wunsch, die OFDM-Übertragung so zu gestalten, dass von der Übertragung von Daten in einem bestimmten Zeitschlitz möglichst wenig Zeit vergeht bis der gleiche Zeitschlitz erneut an der Reihe ist. Daraus ergibt sich die Bestrebung, den Datenblock, der in einem Zeitschlitz zu übertragen ist, möglichst klein zu halten. Bei einer OFDM-Übertragung ist jedoch ein fortlaufender Abgleich der Zeitbasis und der Frequenz eines sendenden und eines empfangenden Teilnehmers erforderlich. In bekannten OFDM-Systemen (z.B. WiFi IEEE 802.11) enthält deshalb jedes OFDM-Paket normalerweise eine Trainingssequenz, die ausschließlich diesem Abgleich dient und die keine Nutzinformation enthält. In solchen Systemen ist es daher nicht möglich, ein OFDM-Paket zu übertragen, das ausschließlich ein einzelnes OFDM-Symbol enthält, da ja mindestens vorab die Abgleichinformation übertragen werden muss.

Erfindungsgemäß wird dieser Zielkonflikt dadurch gelöst, dass die beschriebene Abgleichinformation nicht individuell in jeden Zeitschlitz eingefügt wird, sondern als Teil eines Frames für alle teilnehmenden Module gemeinsam übertragen wird. Durch diese Maßnahme wird es möglich, in einem Zeitschlitz nur genau ein OFDM-Symbol vorzusehen. Dadurch ergibt sich eine effektive Ausnutzung der Zeitschlitze bei gleichzeitiger Minimierung der Größe des Datenblocks, der in einem Zeitschlitz übertragen wird, und somit einer Minimierung der Zeit, die von der Erfassung eines Audiosamples bis zu seiner Übertragung verstreicht.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung eines Drahtlos-Mikrofon- und/oder In-Ear-Monitoringsystems gemäß einem ersten Ausführungsbeispiel,
- Fig. 2: zeigt eine schematische Frame-Struktur einer Drahtlosübertragung gemäß dem ersten Ausführungsbeispiel, und
- Fig. 3: zeigt eine schematische Darstellung eines Synchronisationsvorgangs bei der Drahtlosübertragung gemäß dem ersten Ausführungsbeispiel.

Das erfindungsgemäße Drahtlos-Mikrofon und/oder In-Ear-Monitoringsystem stellt ein sogenanntes Program Making Special Event System PMSE dar.

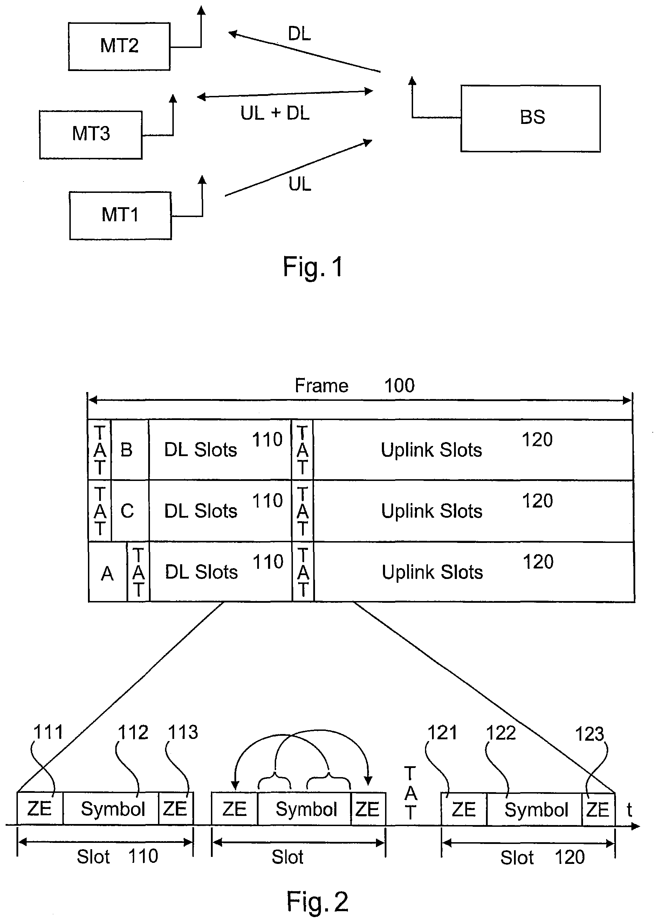

Fig. 1 zeigt eine schematische Darstellung eines Drahtlos-Mikrofons und/oder In-Ear-Monitoringsystems gemäß einem ersten Ausführungsbeispiel. In Fig. 1 sind eine Basisstation BS und drei mobile Geräte (Mobile Terminals) MT1-MT3 gezeigt. Die Basisstation BS ist typischerweise eine stationäre Vorrichtung und empfängt Audiosignale über einen Mikrofonkanal von einem ersten mobilen Gerät MT1, welches als Drahtlos-Mikrofon ausgestaltet sein kann. Die Basisstation BS kann über einen In-Ear-Kanal Audiosignale an ein zweites mobiles Gerät MT2 senden, welches als eine Drahtlos-In-Ear-Monitoreinheit ausgestaltet sein kann. Die Übertragung der ersten Audiosignale von dem Mikrofon MT1 an die Basisstation BS wird als Uplink UL und die Übertragung des zweiten Audiosignals von der Basisstation an die In-Ear-Monitoreinheit MT2 wird als Downlink DL bezeichnet. In dem Drahtlos-Mikrofon und/oder In-Ear-Monitoringsystem folgt somit eine Übertragung eines ersten Audiosignals im Uplink UL von dem mobilen Gerät MT1 an die Basisstation und/oder eine zweite Audioübertragung im Downlink DL an das zweite mobile Gerät MT2. Ein mobiles Gerät MT3 kann sowohl am Downlink DL als auch am Uplink UL teilnehmen, empfängt also zweite Audiosignale und sendet erste Audiosignale.

Die Drahtlosübertragung in dem erfindungsgemäßen Drahtlos-Mikrofon- und/oder In-Ear-Monitoringsystem basiert auf einer drahtlosen OFDM-Übertragung in Kombination mit einer TDMA-Übertragung. Durch die TDMA erfolgt keine kontinuierliche Übertragung, sondern lediglich eine Übertragung in Zeitschlitzen oder Slots. Während jedes Zeitschlitzes erfolgt eine Übertragung basierend auf einem OFDM-Symbol. Durch die TDMA kann ein Mehrfachzugriff auf den Übertragungskanal gewährleistet werden.

Gemäß der Erfindung kann jedes OFDM-Symbol durch eine zyklische Erweiterung (beispielsweise Cyclic Prefix: CP) verlängert werden. Die Länge der zyklischen Erweiterung CP ist durch die maximale Umlaufzeit des Kanals und die Ungenauigkeit der zeitlichen Synchronisation bestimmt. Ein OFDM-Signal kann ein hohes Peak-to-Average Power Ratio PAPR aufweisen, so dass typischerweise lineare Senderverstärker verwendet werden müssen. Gemäß der Erfindung wird ein Transmit Power Control (TPC) verwendet, um die Sendeleistungen der mobilen Geräte zu reduzieren, was auch zu einer reduzierten Leistungsaufnahme führt. Dies ist vorteilhaft, da diese Geräte typischerweise batteriegespeist sind. Anhand der Empfangsleistung des Downlinks (DL) kann auf die benötigte Sendeleistung für den Uplink (UL) geschlossen werden.

Gemäß der Erfindung weist der Übertragungskanal eine Breite zwischen 5MHz bis 26MHz auf. Vorzugsweise beträgt die Kanalbreite 8MHz. Die Trägerfrequenzen für die Übertragung können aus dem Frequenzbereich zwischen 470MHz bis 790MHz und zwischen 1,4GHz und 1,8GHz ausgewählt werden, andere Frequenzbereiche sind jedoch ebenso möglich, wenn die Frequenzregulierungsbehörden dies zulassen.

Fig. 2 zeigt eine schematische Darstellung einer Framestruktur der Drahtlosübertragung gemäß dem ersten Ausführungsbeispiel. Die Drahtlosübertragung zu der Basisstation und von der Basisstation erfolgt basierend auf der in Fig. 2 gezeigten Frame- bzw. Rahmenstruktur. Jeder Frame 100 weist einen oder mehrere Downlink (DL) Slots 110 und einen oder mehrere Uplink (UL) Slots 120 auf. Ferner weist jeder Frame 100 mindestens zwei Senderichtungs-Umschaltzeitdauern (Turn Around Time TAT) zur Änderung der Senderichtung auf. Zusätzlich dazu kann jeder Frame weitere Informationen enthalten. In Fig. 2 sind drei Frames 100 gezeigt, welche zeitlich hintereinander übertragen werden können. Die drei Frames 100 unterscheiden sich nur in ihrem ersten Slot. Diese Unterschiede werden im Folgenden erläutert. Ferner zeigt Fig. 2 einen Ausschnitt eines Frames um die zweite TAT herum bestehend aus zwei DL-Slots 110 und einem UL-Slot 120. Jeder Slot bildet sich aus genau einem OFDM-Symbol 112, 122, das gegebenenfalls zyklisch vorne und/oder hinten erweitert wird.

Zur Demodulation eines OFDM-Signals bzw. -Symbols müssen die Empfangsleistung, die Kanalübertragungsfunktion, die zeitliche Position und der Trägerfrequenz-Versatz (Carrier Frequency Offset: CFO) bestimmt werden. Die Messung der Empfangsleistung wird benötigt, um die Verstärkung einer Empfangseinheit an den Dynamikbereich der Empfangseinheit anzupassen. Diese Anpassung der Verstärkung erfolgt durch eine Automatic Gain Control (AGC). Um Modulationssymbole jedes Subträgers bei der OFDM-Übertragung zu entzerren, ist eine Kenntnis des komplexen Kanalübertragungsfaktors jedes Subträgers notwendig. Hierzu kann eine pilotbasierte Kanalschätzung mit Interpolation erfolgen. Eine zeitliche Synchronisation muss erfolgen, damit das Fast-Fourier-Transformation FFT-Fenster entsprechend ausgeschnitten werden kann.

Vorzugsweise wird ein Trägerfrequenz-Offset (CFO) vor Durchführung der FFT im Zeitbereich korrigiert.

Gemäß der Erfindung weist jeder Slot genau ein OFDM-Symbol optional mit einer zyklischen Erweiterung auf. Hierdurch wird gewährleistet, dass die Latenz des Systems gering ist. Vorzugsweise ist die Latenz kleiner gleich 2ms. Gemäß der Erfindung wird die gleiche Trägerfrequenz im zeitlichen Duplex für die Übertragung der In-Ear-Monitorkanäle und die Übertragung der Mikrofonsignale verwendet. Damit unterteilt sich ein TDMA-Frame 100 in einen Downlink DL bzw. Downlink Slots 110 (von der Basisstation zu der In-Ear-Monitoreinheit) und einen Uplink UL bzw. Uplink Slots 120 (von dem Drahtlos-Mikrofon zu der Basisstation BS), wobei der Downlink DL und der Uplink UL jeweils durch eine Senderichtungsumschaltzeit (Turn Around Time TAT) zur Umschaltung der Senderichtung voneinander getrennt werden.

Gemäß der Erfindung nimmt der erste Slot in einem TDMA-Rahmen eine Sonderrolle ein, indem er dem Austausch von Kontrollinformationen dient. Gemäß der Erfindung können drei TDMA-Rahmen oder Frames zu einem Superrahmen bzw. Superframe zusammengefasst werden. In jedem dieser drei TDMA-Rahmen weist der erste Slot eine unterschiedliche Funktion auf. Der Beacon-Slot B stellt ein Downlink-Slot dar und enthält keine Informationen, sondern ein bekanntes Symbol für die Automatic Gain Control, die zeitliche Synchronisation und die Carrier-Frequency-Offset-Messung CFO an dem mobilen Gerät. Gemäß der Erfindung wird davon ausgegangen, dass die Werte für die Automatic Gain Control, die zeitliche Synchronisation und die Carrier-Frequency-Offset-Messung innerhalb eines TDMA-Superframes konstant sind. Der Control-Slot C ist ebenfalls ein Downlink-Slot und wird zur Übertragung von Steuerinformationen an die bereits bekannten mobilen Geräte MT verwendet. Der Antwort-Slot A ist ein Uplink-Slot. Durch den Antwort-Slot A können die mobilen Geräte MT einen Austausch von Steuerinformationen aus dem vorhergehenden Control-Slot C quittieren und/oder Daten senden. Wenn die Basisstation den Antwort-Slot A frei gibt, können die mobilen Geräte z. B. über das Slotted-Aloha-Verfahren eigenständig Anfragen an die Basisstation senden. Für den Fall, dass der Antwort-Slot A als Ruhepause definiert ist, kann er von allen Geräten dazu verwendet werden, in dem verwendeten Frequenzband nach Störern zu suchen. Das synchronisierte oder Slotted-Aloha-Verfahren ist ein Vielfachzugriffsverfahren, bei dem Zeitschlitze definiert werden. Jede Station darf nur am Beginn eines Zeitschlitzes senden. Es ist aus der Literatur bekannt.

Mobile Geräte MT1, MT3 als Drahtlos-Mikrofone empfangen den Beacon-Slot B und den Control-Slot C bevor sie einen Uplink-Slot oder einen Antwort-Slot A belegen. Mobile Geräte, welche als In-Ear-Monitoreinheiten ausgestaltet sind, belegen keinen Uplink-Slot. Sie sind trotzdem fähig zu senden, um Kontrollinformationen in den Antwort-Slot A zu senden.

Nachdem ein mobiles Gerät MT den Beacon-Slot B empfangen hat, kann es die Empfangsleistung des Downlinks bestimmen. Hierbei kann der Beacon-Slot eine gleiche RMS Leistung wie jeder andere Slot aufweisen. Anhand der erfassten Empfangsleistung des Downlinks kann die Automatic Gain Control (AGC) durchgeführt werden. Der Beacon Slot B kann aus sich wiederholenden Mustern bestehen. Dann deutet die Phasendrehung zweier benachbarter identischer Muster innerhalb des Beacons B auf einen Trägerfrequenz Offset (CFO) hin. Für die zeitliche Synchronisation wird die zeitliche Position des Beacon-Slots B in dem Rahmen ermittelt. Gemäß der Erfindung kann sich das mobile Gerät MT mit Hilfe der Messung des Trägerfrequenz-Offsets (CFO) auf den bzw. mit dem Beacon-Slot B synchronisieren, so dass das mobile Gerät MT mit der Basisstation synchronisiert ist. Damit kann eine Messung des Trägerfrequenz-Offsets (CFO) in der Basisstation überflüssig sein. Das mobile Gerät MT ist dazu ausgestaltet, dass keine Daten an die Basisstation BS gesendet werden, bevor nicht eine zeitliche Synchronisation stattgefunden hat. Damit ist die Übertragung des Uplinks bzw. alle Slots des Uplinks UL sowohl zeitlich als auch hinsichtlich der Trägerfrequenz synchron mit der Basisstation BS. Mittels einer verlängerten zyklischen Erweiterung CP können verbleibende Ungenauigkeiten hinsichtlich der zeitlichen Synchronisation und der Laufzeitunterschiede ausgeglichen werden. Somit muss die Basisstation keine zeitliche Synchronisation durchführen.

Das mobile Gerät MT kann die Empfangsleistung des Beacon-Slots verwenden, um die gesamte Kanaldämpfung zu bestimmen. Mit Hilfe des Transmit Power Controls (TPC) kann die Sendeleistung so reduziert werden, dass die Leistungsaufnahme des MT reduziert wird und bei der BS trotzdem noch hinreichende Empfangsleistung ankommt.

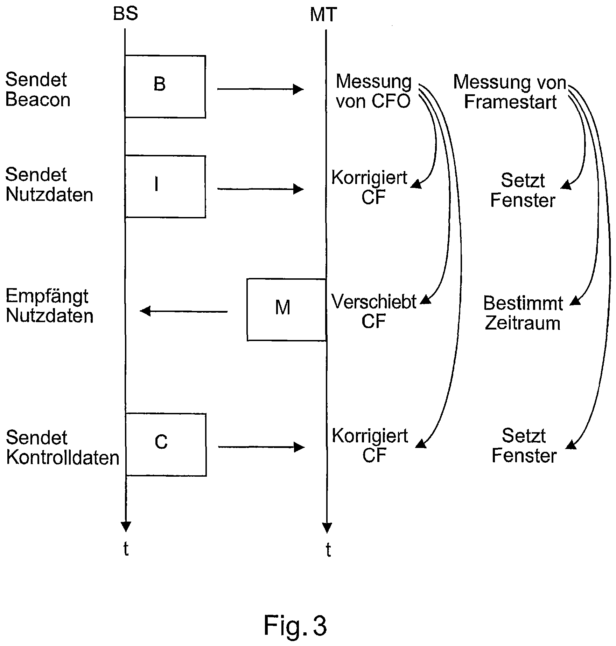

Fig. 3 zeigt eine Darstellung der Synchronisation der Übertragung gemäß dem ersten Ausführungsbeispiel. Zunächst sendet die Basisstation BS den Beacon-Slot B an das mobile Gerät MT. Basierend auf den Informationen des Beacon-Slots BS erfolgt eine Messung des Trägerfrequenz-Offsets (CFO) sowie dem Startzeitpunkt des Superframes. Nachdem der Beacon-Slot BS gesendet worden ist, sendet die Basisstation BS Nutzdaten, welche In-Ear-Monitor-Slots oder Kontrolldaten C darstellen können. Das mobile Gerät MT korrigiert den Trägerfrequenz-Offset (CFO) und setzt das Empfangs-FFT-Fenster. Bevor das mobile Gerät MT die Daten in den Mikrofon-Slots M sendet, erfolgt eine Verschiebung der Trägerfrequenz um den gemessenen Träger-Offset (CFO) und ein Zeitraum für das Sende-FFT-Fenster wird bestimmt. Die Basisstation BS empfängt die Nutzdaten in den Mikrofon-Slots M, ohne dass eine Frequenz- oder Zeitsynchronisation erfolgen muss.

## Patentansprüche

1. Drahtlos-Mikrofon- und/oder In-Ear-Monitoringsystem, mit
mindestens einem ersten mobilen Gerät (MT), insbesondere einem Drahtlos-Mikrofon, zum drahtlosen Senden von ersten Audiosignalen (UL) und/oder zum drahtlosen Empfangen von zweiten Audiosignalen (DL),
einem zweiten mobilen Gerät (MT), und
mindestens einer Basisstation (BS) zum drahtlosen Empfangen der von dem ersten mobilen Gerät (MT) gesendeten ersten Audiosignale (UL) und/oder zum drahtlosen Senden der zweiten Audiosignale (DL) an das erste und/oder das zweite mobile Gerät (MT),
wobei die Drahtlos-Übertragung auf einer Orthogonal-Frequency-Division-Multiplex OFDM Time-Division-Multiple-Access TDMA-Übertragung beruht,
wobei jedes mobile Gerät (MT) mindestens einmal innerhalb von 2ms erste Audiosignale (UL) sendet oder zweite Audiosignale (DL) empfängt,
wobei die TDMA-Übertragung in TDMA-Frames (100) erfolgt und jeder TDMA-Frame (100) eine Mehrzahl von Slots aufweist,
wobei die mobilen Geräte (MT) dazu ausgestaltet sind, innerhalb einzelner Slots der TDMA-Frames die ersten oder zweiten Audiosignale zu senden oder zu empfangen,
wobei die mindestens eine Basisstation (BS) dazu ausgestaltet ist, in einem Beacon-Slot (B) ein bekanntes Beacon-Symbol an die mobilen Geräte (MT) zu senden,
wobei der Beacon-Slot (B) der erste Slot eines TDMA-Frames (100) ist und ein Downlink-Slot ist,
wobei die mobilen Geräte (MT) dazu ausgestaltet sind, das Beacon-Symbol für die OFDM-Übertragung auszuwerten, sodass die OFDM-Übertragung von den einzelnen mobilen Geräten (MT) auf dem Empfang des genannten Beacon-Symbols beruht, und
wobei die Slots jeweils genau ein OFDM-Symbol (112, 122) aufweisen,
wobei die mobilen Geräte (MT) das Beacon-Symbol zur Bestimmung einer Automatic Gain Control (AGC), zur Bestimmung einer zeitlichen Synchronisation und/oder zur Bestimmung eines Carrier Frequency Offset (CFO) verwenden.

2. Drahtlos-Mikrofon- und/oder In-Ear-Monitoringsystem nach Anspruch 1,
wobei die Auswertung des Beacon-Symbols dazu dient, eine Empfangsleistung zu bestimmen.

3. Drahtlos-Mikrofon- und/oder In-Ear-Monitoringsystem nach Anspruch 1,
wobei jedes OFDM-Symbol (112, 122) durch eine zyklische Erweiterung (CP) verlängert ist.

4. Drahtlos-Mikrofon- und/oder In-Ear-Monitoringsystem nach einem derAnsprüche 1 bis 3,
wobei ein Frame (100) mindestens zwei Senderichtungs-Umschaltzeitdauern (TAT) aufweist.

5. Drahtlos-Mikrofon- und/oder-In-Ear-Monitoringsystem nach einem der Ansprüche 1 bis 4,
wobei ein Übertragungskanal der Drahtlos-Übertragung eine Breite von 5MHz bis 26MHz aufweist.

6. Drahtlos-Mikrofon- und/oder In-Ear-Monitoringsystem nach einem derAnsprüche 1 bis 5,
wobei mehrere Frames (100) einen Superframe bilden,
wobei innerhalb eines Superframes mindestens ein Beacon-Slot (B), ein Control-Slot (C) und ein Antwort-Slot (A) enthalten sind.

7. Drahtlos-Mikrofon- und/oder In-Ear-Monitoringsystem nach Anspruch 6,
wobei der Control-Slot (C) Steuerinformationen für die mobilen Geräte (MT) aufweist, und/oder
wobei der Antwort-Slot (A) zur Quittierung des Austausches der Steuerinformationen in dem Control-Slot (C) durch die mobilen Geräte (MT) verwendet wird.

8. Drahtlos-Mikrofon- und/oder In-Ear-Monitoringsystem nach Anspruch 1,
wobei das zweite mobile Gerät eine Drahtlos-In-Ear-Monitoreinheit zum drahtlosen Empfangen von den zweiten Audiosignalen (DL) ist.

9. Drahtlos-Mikrofon- und/oder In-Ear-Monitoringsystem nach Anspruch 1,
wobei das zweite mobile Gerät geeignet ist zum drahtlosen Senden von ersten Audiosignalen (UL) und zum drahtlosen Empfangen von den zweiten Audiosignalen (DL).

10. Drahtlos-Mikrofon- und/oder In-Ear-Monitoringsystem nach Anspruch 1,
wobei sich die mobilen Geräte (MT) mittels des Carrier Frequency Offsets (CFO) auf die Trägerfrequenz der Basisstation (BS) synchronisieren.

11. Verfahren zum Steuern eines Drahtlos-Mikrofon- und/oder In-Ear-Monitoringsystems, das mindestens ein erstes mobiles Gerät (MT), insbesondere Drahtlos-Mikrofon, zum drahtlosen Senden von ersten Audiosignalen (UL) und/oder zum drahtlosen Empfangen von zweiten Audiosignalen (DL), ein zweites mobiles Gerät (MT) und mindestens eine Basisstation (BS) zum drahtlosen Empfangen der von den mobilen Geräten (MT) gesendeten ersten Audiosignale (UL) und/oder zum drahtlosen Senden der zweiten Audiosignale (DL) an die mobilen Geräte (MT) aufweist,
wobei die Drahtlos-Übertragung auf einer Orthogonal-Frequency-Division-Multiplex OFDM Time-Division-Multiple-Access TDMA-Übertragung beruht,
wobei jedes mobile Gerät (MT) mindestens einmal innerhalb von 2ms erste Audiosignale (UL) sendet oder zweite Audiosignale (DL) empfängt,
wobei die TDMA-Übertragung in TDMA-Frames (100) erfolgt und jeder TDMA-Frame (100) eine Mehrzahl von Slots aufweist,
wobei die mobilen Geräte (MT) dazu ausgestaltet sind, innerhalb einzelner Slots der TDMA-Frames die ersten oder zweiten Audiosignale zu senden oder zu empfangen,
wobei die mindestens eine Basisstation (BS) dazu ausgestaltet ist, in einem Beacon-Slot (B) ein bekanntes Beacon-Symbol an die mobilen Geräte (MT) zu senden,
wobei der Beacon-Slot (B) der erste Slot eines TDMA-Frames (100) ist und ein Downlink-Slot ist,
wobei die mobilen Geräte (MT) dazu ausgestaltet sind, das Beacon-Symbol für die OFDM-Übertragung auszuwerten, sodass die OFDM-Übertragung von den einzelnen mobilen Geräten (MT) auf dem Empfang des genannten Beacon-Symbols beruht, und
wobei die Slots jeweils genau ein OFDM-Symbol (112, 122) aufweisen,
wobei die mobilen Geräte (MT) das Beacon-Symbol zur Bestimmung einer Automatic Gain Control (AGC), zur Bestimmung einer zeitlichen Synchronisation und/oder zur Bestimmung eines Carrier Frequency Offset (CFO) verwenden.

## Claims

1. A wireless microphone and/or in-ear monitoring system, comprising
at least one first mobile device (MT), in particular a wireless microphone, for wirelessly transmitting first audio signals (UL) and/or for wirelessly receiving second audio signals (DL),
a second mobile device (MT), and
at least one base station (BS) for wirelessly receiving first audio signals (UL) transmitted by the first mobile device (MT) and/or for wirelessly transmitting the second audio signals (DL) to the first and/or the second mobile device (MT),
wherein the wireless transmission is based on an Orthogonal Frequency-Division Multiplex OFDM Time-Division Multiple Access TDMA transmission,
wherein each mobile device (MT) transmits first audio signals (UL) or receives second audio signals (DL) at least once in 2 ms,
wherein the TDMA transmission takes place in TDMA frames (100), and each TDMA frame (100) comprises a plurality of slots,
wherein the mobile devices (MT) are configured to send and receive the first or second audio signals within individual slots of the TDMA frames,
wherein the at least one base station (BS) is configured to send a known beacon symbol to the mobile devices (MT) in a beacon slot (B),
wherein the beacon slot (B) is the first slot of a TDMA frame (100) and constitutes a downlink slot,
wherein the mobile devices (MT) are configured to analyze the beacon symbol for the OFDM transmission so that the OFDM transmission of the respective mobile devices are based on the reception of the beacon symbols, and
wherein each slot comprises precisely one OFDM symbol (112, 122),
wherein the mobile devices (MT) use the beacon symbol for determining Automatic Gain Control (AGC), for determining a time synchronization and/or for determining a Carrier Frequency Offset (CFO).

2. A wireless microphone and/or in-ear monitoring system according to claim 1, wherein the analysis of the beacon symbol is used to determine received power.

3. A wireless microphone and/or in-ear monitoring system according to claim 1, wherein each OFDM symbol (112, 122) is prolonged by a cyclic prolongation (CP).

4. A wireless microphone and/or in-ear monitoring system according to one of the claims 1 to 3, wherein
a frame (100) has at least two transmission direction switch over times (TAT).

5. A wireless microphone and/or in-ear monitoring system as set forth in one of the claims 1 to 4, wherein
a transmission channel of the wireless transmission has a width of between 5 MHz and 26 MHz.

6. A wireless microphone and/or in-ear monitoring system as set forth in one of the claims 1 to 5, wherein
wherein a plurality of frames (100) form a superframe, and
wherein at least a beacon slot (B), a control slot (C) and an answer slot (A) are contained within a superframe.

7. A wireless microphone and/or in-ear monitoring system as set forth in claim 6, wherein
wherein the control slot (C) comprises control information for the mobile devices (MT), and/or
wherein the answer slot (A) is used for acknowledging the exchange of the control information in the control slot (C) by the mobile devices (MT).

8. A wireless microphone and/or in-ear monitoring system as set forth in claim 1, wherein
the second mobile device is a wireless in-ear monitoring unit for wireless receiving of the second audio signals (DL).

9. A wireless microphone and/or in-ear monitoring system according to claim 1, wherein
the second mobile device is configured for wireless transmission of first audio signals (UL) and for wireless receiving the second audio signals (DL).

10. A wireless microphone and/or in-ear monitoring system according to claim 1, wherein
the mobile devices (MT) are synchronized to the carrier frequency of the base station (BS) by means of a Carrier Frequency Offset (CFO).

11. Method of controlling a wireless microphone and/or in-ear monitoring system, which comprises at least one first mobile device (MT), in particular a wireless microphone, for wirelessly transmitting first audio signals (UL) and/or for wirelessly receiving second audio signals (DL), a second mobile device (MT) and at least one base station (BS) for wirelessly receiving the first audio signals transmitted by the mobile devices (MT) and/or for wireless transmitting the second audio signals (DL) to the wireless devices (MT),
wherein the wireless transmission is based on an Orthogonal Frequency Division Multiplex OFDM Time Division Multiple Access TDMA transmssion,
wherein each mobile device (MT) transmits first audio signals (UL) or receives second audio signals (DL) at least once within 2 ms,
wherein the TDMA transmission is performed in TDMA frames (100) and each TDMA frame (100) comprises a plurality of slots,
wherein the mobile device is configured to send and receive first or second audio signals within individual slots of the TDMA frames,
wherein the at least one base station (BS) is configured to send a known beacon symbol to the mobile devices (MT) in a beacon slot (B),
wherein the beacon slot (B) is the first slot of a TDMA frame (100) and is a downlink slot,
wherein the mobile device (MT) is configured to analyze the beacon symbol for the OFDM transmission such that the OFDM transmission of the individual mobile devices (MT) is based on the reception of the beacon symbol, and
wherein the slots comprise exactly one OFDM symbol (112, 122),
wherein the mobile devices (MT) use the beacon symbol for determining an Automatic Gain Control (AGC) for determining a time synchronization and/or for determining a Carrier Frequency Offset (CFO).

## Revendications

1. Système de microphone sans fil et/ou système de retour intra-auriculaire, avec
au moins un premier appareil mobile (MT), en particulier un microphone sans fil, pour envoyer sans fil des premiers signaux audio (UL) et/ou pour recevoir sans fil des deuxièmes signaux audio (DL),
un deuxième appareil mobile (MT), et
au moins un poste de base (BS) pour recevoir sans fil les premiers signaux audio (UL) envoyés par le premier appareil mobile (MT) et/ou pour envoyer sans fil les deuxièmes signaux audio (DL) au premier et/ou au deuxième appareil mobile (MT),
dans lequel la transmission sans fil repose sur une transmission OFDM (Orthogonal Frequency Division Multiplex, modulation de signaux numériques par répartition en fréquences orthogonales) TDMA (Time Division Multiple Access, accès multiple par répartition temporelle),
dans lequel chaque appareil mobile (MT) envoie des premiers signaux audio (UL) ou reçoit des deuxièmes signaux audio (DL) au moins une fois dans un intervalle de temps de 2 ms,
dans lequel la transmission TDMA a lieu dans des trames TDMA (100) et chaque trame TDMA (100) présente une multitude de créneaux,
dans lequel les appareils mobiles (MT) sont configurés pour envoyer ou pour recevoir les premiers ou deuxièmes signaux audio dans divers créneaux des trames TDMA,
dans lequel l'au moins un poste de base (BS) est configuré pour envoyer aux appareils mobiles (MT) un symbole de balise connu dans un créneau de balise (B),
dans lequel le créneau de balise (B) est le premier créneau d'une trame TDMA (100) et est un créneau de liaison descendante,
dans lequel les appareils mobiles (MT) sont configurés pour évaluer le symbole de balise pour la transmission OFDM si bien que la transmission OFDM des divers appareils mobiles (MT) repose sur la réception dudit symbole de balise, et
dans lequel les créneaux présentent respectivement précisément un symbole OFDM (112, 122),
dans lequel les appareils mobiles (MT) utilisent le symbole de balise pour définir un contrôle automatique du gain (AGC), pour définir une synchronisation dans le temps et/ou pour définir un décalage de fréquence porteuse (CFO, Carrier Frequency Offset).

2. Système de microphone sans fil et/ou de retour intra-auriculaire selon la revendication 1,
dans lequel l'évaluation du symbole de balise sert à définir une puissance de réception.

3. Système de microphone sans fil et/ou de retour intra-auriculaire selon la revendication 1,
dans lequel chaque symbole OFDM (112, 122) est prolongé par une extension cyclique (CP).

4. Système de microphone sans fil et/ou de retour intra-auriculaire selon l'une quelconque des revendications 1 à 3,
dans lequel une trame (100) présente au moins deux durées de commutation de sens d'envoi (TAT).

5. Système de microphone sans fil et/ou de retour intra-auriculaire selon l'une quelconque des revendications 1 à 4,
dans lequel un canal de transmission de la transmission sans fil présente une largeur de 5 MHz à 26 MHz.

6. Système de microphone sans fil et/ou de retour intra-auriculaire selon l'une quelconque des revendications 1 à 5,
dans lequel plusieurs trames (100) forment une super trame,
dans lequel au moins un créneau de balise (B), un créneau de contrôle (C) et un créneau de réponse (A) sont contenus à l'intérieur d'une super trame.

7. Système de microphone sans fil et/ou de retour intra-auriculaire selon la revendication 6,
dans lequel le créneau de contrôle (C) présente des informations de commande pour les appareils mobiles (MT), et/ou
dans lequel le créneau de réponse (A) est utilisé pour confirmer le remplacement des informations de commande dans le créneau de contrôle (C) par les appareils mobiles (MT).

8. Système de microphone sans fil et/ou de retour intra-auriculaire selon la revendication 1,
dans lequel le deuxième appareil mobile est une unité de retour intra-auriculaire sans fil pour recevoir sans fil les deuxièmes signaux audio (DL).

9. Système de microphone sans fil et/ou de retour intra-auriculaire selon la revendication 1,
dans lequel le deuxième appareil mobile est adapté pour envoyer sans fil des premiers signaux audio (UL) et pour recevoir sans fil les deuxièmes signaux audio (DL).

10. Système de microphone sans fil et/ou de retour intra-auriculaire selon la revendication 1,
dans lequel les appareils mobiles (MT) se synchronisent sur la fréquence porteuse du poste de base (BS) au moyen du décalage de fréquence porteuse (CFO).

11. Procédé pour commander un système de microphone sans fil et/ou de retour intra-auriculaire, qui présente au moins un premier appareil mobile (MT), en particulier un microphone sans fil, pour envoyer sans fil des premiers signaux audio (UL) et/ou pour recevoir sans fil des deuxièmes signaux audio (DL), un deuxième appareil mobile (MT) et au moins un poste de base (BS) pour recevoir sans fil les premiers signaux audio (UL) envoyés par les appareils mobiles (MT) et/ou pour envoyer sans fil les deuxièmes signaux audio (DL) aux appareils mobiles (MT),
dans lequel la transmission sans fil repose sur une transmission OFDM TDMA,
dans lequel chaque appareil mobile (MT) envoie des premiers signaux audio (UL) et reçoit des deuxièmes signaux audio (DL) au moins une fois dans un intervalle de temps de 2 ms,
dans lequel la transmission TDMA a lieu dans des trames TDMA (100) et chaque trame TDMA (100) présente une multitude de créneaux,
dans lequel les appareils mobiles (MT) sont configurés pour envoyer ou pour recevoir dans certains créneaux des trames TDMA les premiers ou deuxièmes signaux audio,
dans lequel l'au moins un poste de base (BS) est configuré pour envoyer aux appareils mobiles (MT) un symbole de balise connu dans un créneau de balise (B),
dans lequel le créneau de balise (B) est le premier créneau d'une trame TDMA (100) et est un créneau de liaison descendante,
dans lequel les appareils mobiles (MT) sont configurés pour évaluer le symbole de balise pour la transmission OFDM si bien que la transmission OFDM des divers appareils mobiles (MT) repose sur la réception dudit symbole de balise,
et
dans lequel les créneaux présentent respectivement précisément un symbole OFDM (112, 122),
dans lequel les appareils mobiles (MT) utilisent le symbole de balise pour définir un contrôle automatique du gain (AGC), pour définir une synchronisation dans le temps et/ou pour définir un décalage de fréquence porteuse (CFO).
